# EUROPEAN PATENT SPECIFICATION

(11) **EP 1 732 662 B1**
(45) Date of publication and mention of the grant of the patent: **18.06.2008**
(21) Application number: 04797534.7
(22) Date of filing: 03.11.2004
(51) Int. Cl.: B01D 35/143, C02F 1/00

(54) **REPLACEABLE CARTRIDGE FILTERING JUG**
FILTERKANNE MIT AUSTAUSCHBARER PATRONE
CARAFE FILTRANTE A CARTOUCHE REMPLAÇABLE

(30) Priority: 08.04.2004 IT PD20040095
(43) Date of publication of application: 20.12.2006
(73) Proprietor: Laica S.p.A., 36020 Barbarano Vicentino (VI) (IT)
(72) Inventor: MORETTO, Maurizio, I-36100 Vicenza (IT)
(74) Representative: Susanetto, Carlo
(86) International application number: PCT/EP2004/012391
(87) International publication number: WO 2005/097293

(56) References cited:
- WO-A-00/66245
- WO-A-03/028848
- US-A- 5 536 394
- US-A1- 2002 134 715

## Description

### Technical field of the invention

The invention relates to a replaceable cartridge filtering jug of the type including the features listed in the precharacterising clause of the main claim.

### Background art

Filtering jugs of the abovementioned type are widely used to render drinking water drinkable and/or to render its taste more pleasing.

They are based on the principle of filtering the water which has to be treated through a filtering cartridge. The cartridge has a predetermined useful life and must be replaced at the end of its useful life. It is therefore important to monitor the extent of its exhaustion.

Various devices to monitor the state of exhaustion within filtering jugs of the abovementioned type are known. These devices, as shown in documents US 2002/134715 A and WO 03/028848, are based on counting systems, generally of the mechanical or electronic type.

### Disclosure of the invention

The main object of the invention is to provide a replaceable cartridge filtering jug which has been functionally and structurally designed to monitor exhaustion of the cartridge effectively and at the same time economically.

This is accomplished through a filtering jug manufactured in accordance with the following claims.

### Brief description of the drawings

Advantages and characteristics of the present invention will become clearer from the following detailed description which is given with reference to the appended drawings which are provided purely by way of non-limiting example and in which:
- Figure 1 is a diagrammatical view in cross-section of a filtering jug according to the invention,
- Figure 2 is a view along cross-section II-II of a detail of the filtering jug in Figure 1,
- Figure 3 is a diagrammatical view in cross-section of a first variant embodiment of the invention,
- Figure 4 is a diagrammatical view of a second variant embodiment of the invention.

### Best mode for carrying out the invention

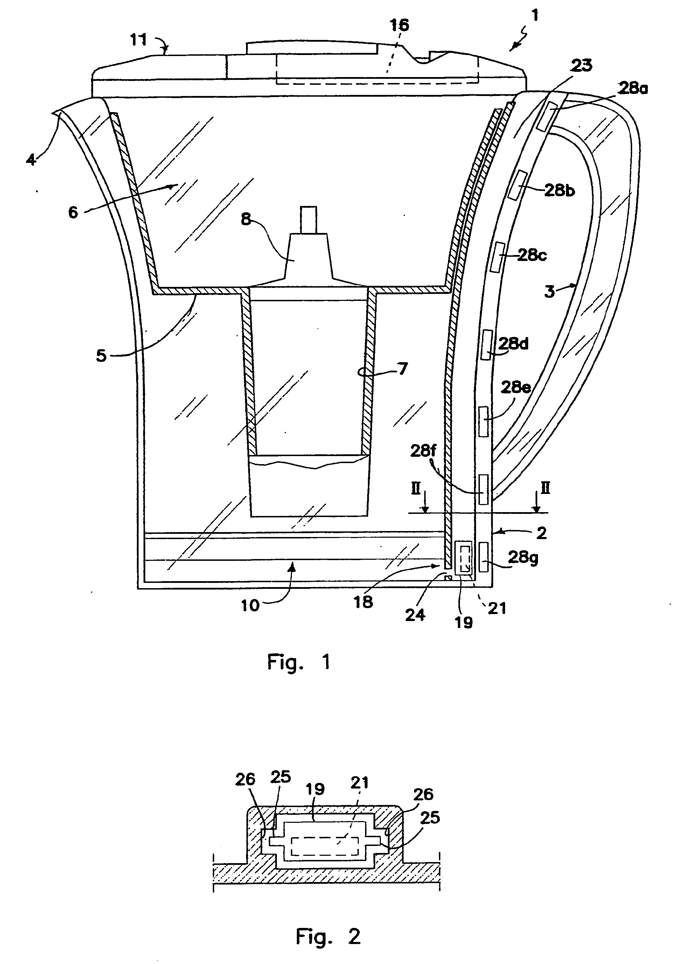

In the figures 1 indicates as a whole a filtering jug including a container 2 with a handle 3 and an opposing pouring spout 4. A hopper 5 forming a first vessel 6 designed to receive water requiring filtration, at the bottom of which there opens an outflow duct 7 designed to receive a filtering cartridge 8 of a replaceable type, is removably housed within container 2. Within container 2 there is also defined a second vessel 10 for collection of the filtered water.

Container 2 is removably closed by a lid 11 which may be provided with an opening panel for filling first vessel 6.

The operation of treating the water takes place by placing water requiring filtration in first vessel 6 after removing lid 11 or after opening the panel in such a way that the water passes through conduit 7 passing through the filtering bed located in cartridge 8 and then collects in second vessel 10.

Means to count the filtering cycles performed are provided in order to determine the end of the useful life of cartridge 8, after which it must be considered that the cartridge is exhausted and must therefore be replaced with a new cartridge. These counting means comprise a counting and calculation device indicated as a whole by 16, which may be provided with displays, indicator means and/or other visual means not shown, with which a floating level indicator indicated as a whole by 18 is associated.

This floating level indicator 18 is mounted in second vessel 10 and comprises a float 19 as well as a proximity sensor which senses the position of the float.

In the example illustrated in Figure 1 there is provided a plurality of proximity sensors 28a, 28b, 28c, 28d, 28e, 28f, 28g. Sensor 28g, which is used to identify a condition in which the jug is completely drained (reference level) is located close to the bottom of second collection vessel 10, while the other sensors are located in an intermediate position at higher levels between reference sensor 28g and terminal sensor 28a which corresponds to the condition in which the jug is filled to a maximum.

In a preferred arrangement the proximity sensors comprise switches of the reed, hall and/or magneto-resistant type and the float bears a magnetic stop 21 which is capable of acting together with the aforesaid switches in order to close the circuit. Switches of a different type, which are in themselves known, may be used as an alternative.

Float 19 is preferably housed in a compensation chamber 23 which communicates with corresponding vessel 10 through a gauged opening 24. This opening 24 lies close to the bottom of vessel 10.

The float is guided within the compensation chamber through two lateral appendages 25 running in corresponding groove guides 26 in the chamber.

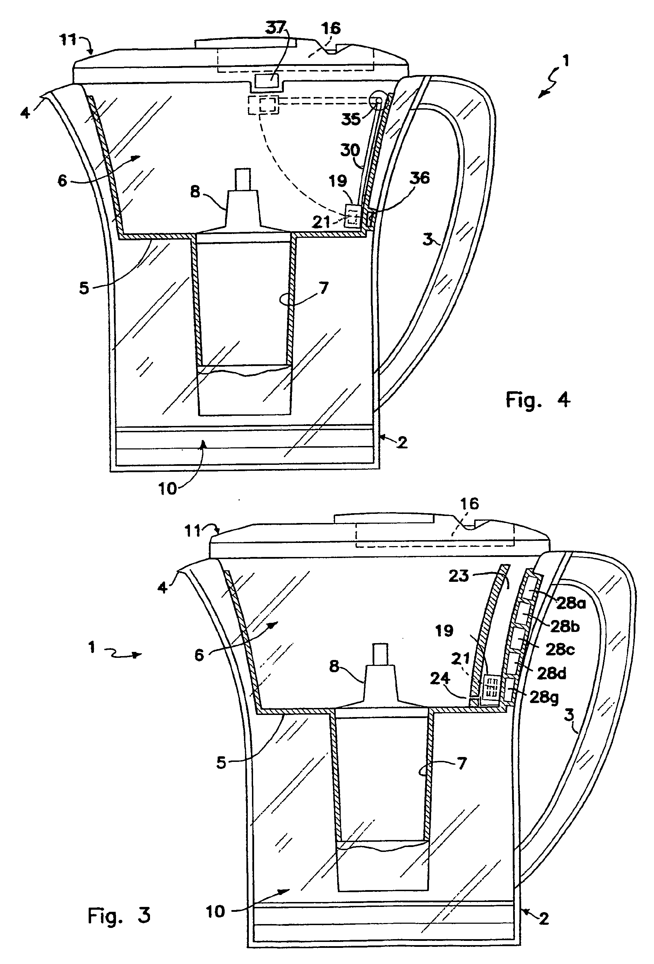

In the example in Figure 3, where similar details bear the same reference numbers as in the previous example, the entire float level detector device is located in first vessel 6 which receives the water which is to be filtered.

In the example in Figure 4 float 19 is mounted at one end of a tilting arm 30 whose opposite end is hinged at 35 to the wall of corresponding vessel 6. In this case too, float 19 has a magnet 21 which is capable of acting together with corresponding proximity sensors 36, 37 located at the bottom of first vessel 6 and at the lid respectively.

The jug according to this invention operates as follows. When vessel 6 which receives the water requiring filtration is filled, the latter flows through cartridge 8 into second vessel 10. The level in the latter rises as a consequence from a minimum level (empty vessel - sensor 28g) to a completely filled level (complete jug and vessel 6 full - sensor 28a). As the level rises the water in vessel 10 flows through opening 24 in the compensation chamber, increasing its level. As a consequence the float is caused to be displaced from sensor 28g to top sensor 28a or as far as the intermediate sensor corresponding to the final level reached in the collecting vessel.

The counting signal generated is evaluated for example by monitoring whether the same has been maintained for a predetermined time, in order to eliminate or avoid any disturbing factors resulting from handling of the jug.

The counting signals generated are then summed by calculating unit 16 which generates a display indicating the state of exhaustion of the cartridge. This display may for example comprise a representation of the number of cycles performed, the litres of water filtered, the remaining litres until the cartridge is exhausted or the residual filtering cycles until the cartridge is exhausted.

Operation of the embodiments in Figures 3 and 4 is substantially equivalent, wherein the guided movement of float 19 is replaced by a corresponding tilting of the supporting arm in the case of the jug in Figure 4.

The invention thus provides many advantages in comparison with the counting mechanisms hitherto known, among which are a relatively low manufacturing cost, optimum reliability of the counting system, and the possibility of taking partial fillings of the jug into account through the presence of multiple sensors.

## Claims

1. Replaceable cartridge filtering jug comprising a vessel (6) containing water requiring filtration and a vessel (10) for the collection of filtered water, the said vessels being connected through the said cartridge (8), as well as means (18) for counting the filtering cycles performed by the cartridge in order to determine the exhaustion state of the latter, **characterised in that** the said counting means comprise at least one float level detector (19) associated with one of the said vessels (6, 10) and capable of generating at least one counting signal fed to the said counting means as a consequence of the corresponding water level being reached within the corresponding vessel.

2. Filtering jug according to claim 1 in which the said level detector comprises at least one proximity sensor (28a-28g) which senses the position of the float (19).

3. Filtering jug according to claim 2 in which the said at least one proximity sensor comprises a switch.

4. Filtering jug according to claim 3 in which the said switch is of the reed, hall and/or magneto-resistant type and the said float has a magnetic stop (21) which is able to co-operate together with the said switch.

5. Filtering jug according to one or more of the preceding claims in which the said float (19) is housed in a compensation chamber (23) communicating with the said vessel (6, 10) through a gauged opening (24).

6. Filtering jug according to claim 5 in which the said float (19) is guided within the said compensation chamber.

7. Filtering jug according to claim 1, 2, 3 or 4 in which the float (19) is mounted at one end of a hinged arm (30) whose opposite extremity (35) is hinged on the corresponding vessel (6, 10).

8. Filtering jug according to one or more of the preceding claims in which the said level detector comprises a plurality of sensors located at rising levels within the corresponding vessel.

## Patentansprüche

1. Filterkanne mit austauschbarer Patrone, die einen Behälter (6), der das eine Filterung erfordernde Wasser enthält, und einen Behälter (10) zum Sammeln des gefilterte Wassers aufweist, wobei die Behälter durch die Patrone (8) sowie durch eine Einrichtung (18) zum Zählen der von der Patrone ausgeführten Filterzyklen verbunden sind, um den Verbrauchszustand der letztern zu ermitteln, **dadurch gekennzeichnet, dass** die Zähleinrichtung zumindest einen Schwimmer-Niveausensor (19) aufweist, der mit einem der Behälter (6, 10) verbunden ist, und zumindest ein Zählsignal erzeugen kann, das der Zähleinrichtung als Folge des entsprechenden Wasserniveaus zugeführt wird, das im entsprechenden Behälter erreicht wurde.

2. Filterkanne nach Anspruch 1, wobei der Niveausensor zumindest einen Näherungssensor (28a-28g) aufweist, der die Position des Schwimmers (19) abtastet.

3. Filterkanne nach Anspruch 2, wobei zumindest der eine Näherungssensor einen Schalter aufweiset.

4. Filterkanne nach Anspruch 3, wobei der Schalter ein Reed-, Hall- oder Magnetoresistenz-Typ ist und der Schwimmer eine magnetische Stoppvorrichtung aufweist, die mit dem Schalter zusammenwirken kann.

5. Filterkanne nach einem oder mehreren der vorausgehenden Ansprüche, wobei der Schwimmer (19) in einer Ausgleichskammer (23) untergebracht ist, die mit dem Behälter (6, 10) durch eine geeichte Öffnung in Verbindung steht.

6. Filterkanne nach Anspruch 5, wobei der Schwimmer (19) im Inneren der Ausgleichskammer geführt ist.

7. Filterkanne nach Anspruch 1, 2, 3 oder 4, wobei der Schwimmer (19) an einem Ende eines schwenkbaren Arms (30) befestigt ist, dessen gegenüberliegendes Ende (35) auf dem entsprechenden Behälter (6, 10) gelenkig angebracht ist.

8. Filterkanne nach einem oder mehreren der vorausgehenden Ansprüche, wobei der Niveausensor eine Mehrzahl von Sensoren aufweist, die im Inneren des entsprechenden Behälters an Anstiegspegeln angeordnet sind.

## Revendications

1. Carafe filtrante à cartouche remplaçable comportant un récipient (6) contenant de l'eau exigeant une filtration et un récipient (10) pour la collecte de l'eau filtrée, lesdits récipients étant reliés par l'intermédiaire de ladite cartouche (8), ainsi que des moyens (18) destinés à compter les cycles de filtrage réalisés par la cartouche afin de déterminer l'état d'épuisement de cette dernière, **caractérisée en ce que** lesdits moyens de comptage comportent au moins un détecteur de niveau à flotteur (19) associé à l'un desdits récipients (6, 10) et capable de générer au moins un signal de comptage délivré aux dits moyens de comptage comme conséquence du niveau d'eau correspondant qui est atteint à l'intérieur du récipient correspondant.

2. Carafe filtrante selon la revendication 1, dans laquelle ledit détecteur de niveau comprend au moins un capteur de proximité (28a à 28g) qui détecte la position du flotteur (19).

3. Carafe filtrante selon la revendication 2, dans laquelle ledit au moins un capteur de proximité comprend un contacteur.

4. Carafe filtrante selon la revendication 3, dans laquelle ledit contacteur est du type à lame souple, à effet Hall et/ou magnéto-résistif et ledit flotteur a une butée magnétique (21) qui est capable coopérer avec ledit contacteur.

5. Carafe filtrante selon une ou plusieurs des revendications précédentes, dans laquelle ledit flotteur (19) est logé dans une chambre de compensation (23) qui communique avec ledit récipient (6, 10) par l'intermédiaire d'une ouverture étalonnée (24).

6. Carafe filtrante selon la revendication 5, dans laquelle ledit flotteur (19) est guidé à l'intérieur de ladite chambre de compensation.

7. Carafe filtrante selon la revendication 1, 2 ou 3, dans laquelle le flotteur (19) est monté à une extrémité d'un bras articulé (30) dont l'extrémité opposée (35) est articulée sur le récipient (6, 10) correspond.

8. Carafe filtrante selon une ou plusieurs des revendications précédentes, dans laquelle ledit détecteur de niveau comporte une multiplicité de capteurs disposés à des niveaux montants à l'intérieur du récipient correspondant.
